# EUROPEAN PATENT APPLICATION

(11) **EP 4 510 207 A1**
(43) Date of publication of application: **19.02.2025**
(21) Application number: 22954236.0
(22) Date of filing: 08.08.2022
(51) Int. Cl.: H01M 4/13, H01M 10/0587

(54) **ELECTRODE ASSEMBLY, BATTERY CELL, BATTERY, AND ELECTRICAL DEVICE**

(71) Applicant: Contemporary Amperex Technology Co., Limited, Ningde, Fujian 352100 (CN)
(72) Inventor: CHEN, Jiang, Ningde, Fujian 352100 (CN); ZHOU, Jianhua, Ningde, Fujian 352100 (CN); SONG, Jinyang, Ningde, Fujian 352100 (CN); WU, Kai, Ningde, Fujian 352100 (CN)
(74) Representative: Thoma, Michael
(86) International application number: PCT/CN2022/110921
(87) International publication number: WO 2024/031256

(57) **Abstract**

An electrode assembly (22), a battery cell (20), a battery (100), and an electrical device. The electrode assembly (22) includes a first electrode plate (221); the first electrode plate (221) includes a first current collector (2211), a first active material layer (2212), and a second active material layer (2213); the first active material layer (2212) and the second active material layer (2213) are disposed on two opposite surfaces of the first current collector (2211) respectively; and the first active material layer (2212) has a first tail end (22121), the second active material layer (2213) has a second tail end (22131), the first tail end (22121) and the second tail end (22131) are misaligned in a winding direction of the electrode assembly (22), such that a thin area is formed between the first tail end (22121) and the second tail end (22131) of the first electrode plate (221), which can reduce the thickness of a winding tail area of the first electrode plate (221) and reduce shear stress of the winding tail area of the first electrode plate (221) on adjacent electrode plates in an expansion process of the electrode assembly (221), so that the electrode plates adjacent to the winding tail area of the first electrode plate (221) are less prone to local strain, thereby alleviating the problem of cracking of the electrode plates adjacent to the winding tail area of the first electrode plate (221).

## Description

### Technical Field

The present application relates to the field of battery technologies, and in particular, to an electrode assembly, a battery cell, a battery, and an electrical device.

### Background Art

At present, secondary batteries have the advantages of small size, high energy density, high power density, multiple cycles of use, long storage time, and the like. Therefore, the secondary batteries are widely used in the fields of portable electronic devices, electric vehicles, electric tools, unmanned aerial vehicles, energy storage devices, and the like. Safety of batteries is one of the main concerns of users and also one of the main factors restricting the development of batteries. Therefore, how to improve the safety performance of batteries has become an urgent problem in the field of batteries.

### Summary

Embodiments of the present application provide an electrode assembly, a battery cell, a battery, and an electrical device to improve the safety performance of the battery.

In a first aspect, an embodiment of the present application provides an electrode assembly, the electrode assembly being of a wound structure and including a first electrode plate, the first electrode plate including a first current collector, a first active material layer, and a second active material layer, and the first active material layer and the second active material layer being disposed on two opposite surfaces of the first current collector respectively, where the first active material layer has a first tail end, the second active material layer has a second tail end, and the first tail end and the second tail end are misaligned in a winding direction of the electrode assembly.

In the foregoing technical solution, the first tail end of the first active material layer and the second tail end of the second active material layer, disposed on two opposite surfaces of the first current collector, are misaligned in the winding direction of the electrode assembly, and a thin area is formed between the first tail end and the second tail end of the first electrode plate, which can reduce the thickness of a winding tail area of the first electrode plate and reduce shear stress of the winding tail area of the first electrode plate on adjacent electrode plates in an expansion process of the electrode assembly, so that the electrode plates adjacent to the winding tail area of the first electrode plate are less prone to local strain, thereby alleviating the problem of cracking of the adjacent electrode plates in the presence of the winding tail area of the first electrode plate, reducing the risk of a short circuit caused by puncture of a separator due to the cracking of the electrode plates, and improving the safety performance of a battery cell and a battery having the electrode assembly.

In some embodiments of the first aspect of the present application, in the winding direction X, a distance between the first tail end and the second tail end is L₁, satisfying L₁ ≥ 10 mm.

In the foregoing technical solution, the distance between the first tail end and the second tail end is L₁, satisfying L₁ ≥ 10 mm, to form a long enough and thin winding tail area of the first electrode plate, so that the electrode plates adjacent to the first tail end and the second tail end are less prone to local strain, and the problem of cracking of the adjacent electrode plates is alleviated.

In some embodiments of the first aspect of the present application, the first electrode plate further includes a first thinned portion, the first thinned portion and the first active material layer are disposed on a same surface of the first current collector, and the first thinned portion extends from the first tail end in the winding direction, where the thickness of the first thinned portion is smaller than the thickness of the first active material layer.

In the foregoing technical solution, the first thinned portion can cover a portion of the first current collector, so that the first current collector is exposed as little as possible, thereby reducing the risk of a short circuit caused by puncture of the separator, in contact with the first current collector, of the electrode assembly by burrs on the surface of the first current collector, and further improving the safety performance of the battery cell and the battery having the electrode assembly.

In some embodiments of the first aspect of the present application, the thickness of the first thinned portion decreases gradually in the winding direction.

In the foregoing technical solution, the thickness of the first thinned portion decreases gradually in the winding direction, that is, the thickness of the first thinned portion changes gradually, so that the connection positions of the first thinned portion and the first active material layer do not change suddenly in thickness, which reduces the risk of easy local strain of the adjacent electrode plates due to the connection positions of the first thinned portion and the first active material layer.

In some embodiments of the first aspect of the present application, the first thinned portion is an active material layer having a same polarity as the first active material layer.

In the foregoing technical solution, the first thinned portion is an active material layer having the same polarity as the first active material layer, which is beneficial to increasing energy densities of the battery cell and the battery having the electrode assembly.

In some embodiments of the first aspect of the present application, an expansion coefficient of the first thinned portion is less than that of the first active material layer.

In the foregoing technical solution, the expansion coefficient of the first thinned portion is less than that of the first active material layer, and the first thinned portion is connected to the first tail end, which can constrain expansion of the first active material layer to some extent and reduce the degree of expansion of the first active material layer in the charging and discharging process, thereby reducing the risk of easy local strain of the electrode plate adjacent to the first tail end due to excessive expansion of the first active material layer, and alleviating the problem of cracking of the electrode plates adjacent to the first tail end and the second tail end.

In some embodiments of the first aspect of the present application, the first thinned portion extends from the first tail end in the winding direction to a tail end of the first current collector.

In the foregoing technical solution, the first thinned portion extends to the tail end of the first current collector, and in the winding direction, the surface of the first current collector where the first active material layer is disposed is covered by the first active material layer and the first thinned portion, to reduce the risk of a short circuit caused by puncture of the separator by the burrs on the first current collector.

In some embodiments of the first aspect of the present application, the first electrode plate further includes a second thinned portion, the second thinned portion and the second active material layer are disposed on a same surface of the first current collector, and the second thinned portion extends from the second tail end in the winding direction, where the thickness of the second thinned portion is smaller than the thickness of the second active material layer.

In the foregoing technical solution, the second thinned portion can cover a portion of the first current collector, so that the first current collector is exposed as little as possible, thereby reducing the risk of a short circuit caused by puncture of the separator, in contact with the first current collector, of the electrode assembly by burrs on the surface of the first current collector, and further improving the safety performance of the battery cell and the battery having the electrode assembly.

In some embodiments of the first aspect of the present application, the thickness of the second thinned portion decreases gradually in the winding direction.

In the foregoing technical solution, the thickness of the second thinned portion decreases gradually in the winding direction, that is, the thickness of the second thinned portion changes gradually, so that the connection positions of the second thinned portion and the second active material layer do not change suddenly in thickness, which reduces the risk of easy local strain of the adjacent electrode plates due to the connection positions of the second thinned portion and the second active material layer.

In some embodiments of the first aspect of the present application, the second thinned portion is an active material layer having a same polarity as the second active material layer.

In the foregoing technical solution, the second thinned portion is an active material layer having the same polarity as the second active material layer, which is beneficial to increasing the energy densities of the battery cell and the battery having the electrode assembly.

In some embodiments of the first aspect of the present application, an expansion coefficient of the second thinned portion is less than that of the second active material layer.

In the foregoing technical solution, the expansion coefficient of the second thinned portion is less than that of the second active material layer, and the second thinned portion is connected to the second tail end, which can constrain expansion of the second active material layer to some extent and reduce the degree of expansion of the second active material layer in the charging and discharging process, thereby reducing the risk of easy local strain of the adjacent electrode plates due to excessive expansion of the second active material layer, and alleviating the problem of cracking of the electrode plates adjacent to the first tail end and the second tail end.

In some embodiments of the first aspect of the present application, in the winding direction, the second thinned portion extends from the second tail end in the winding direction to the tail end of the first current collector.

In the foregoing technical solution, the second thinned portion extends to the tail end of the first current collector, and in the winding direction, the surface of the first current collector where the second active material layer is disposed is covered by the second active material layer and the second thinned portion jointly, to reduce the risk of a short circuit caused by puncture of the separator by the burrs on the first current collector.

In some embodiments of the first aspect of the present application, the electrode assembly further includes a separator and a second electrode plate laminated and wound with the first electrode plate, the second electrode plate has a polarity opposite to that of the first electrode plate, and the separator is sandwiched between the first electrode plate and the second electrode plate; the second electrode plate includes a second current collector, a third active material layer, and a fourth active material layer; and the third active material layer and the fourth active material layer are disposed on two opposite surfaces of the second current collector respectively, where the third active material layer has a third tail end, the fourth active material layer has a fourth tail end, and the third tail end and the fourth tail end are misaligned in the winding direction.

In the foregoing technical solution, the third tail end of the third active material layer and the fourth tail end of the fourth active material layer, disposed on the two opposite surfaces of the second current collector, are misaligned in the winding direction of the electrode assembly, and a thin area is formed between the third tail end and the fourth tail end of the second electrode plate, which can reduce the thickness of a winding tail area of the second electrode plate and reduce shear stress of the winding tail area of the second electrode plate on the adjacent electrode plates in the expansion process of the electrode assembly, so that the electrode plates adjacent to the winding tail area of the second electrode plate are less prone to local strain, thereby alleviating the problem of cracking of the adjacent electrode plates in the presence of the winding tail area of the second electrode plate, reducing the risk of a short circuit caused by puncture of the separator due to the cracking of the electrode plates, and improving the safety performance of the battery cell and the battery having the electrode assembly.

In some embodiments of the first aspect of the present application, in the winding direction, a distance between the third tail end and the fourth tail end is L₂, satisfying L₂ ≥ 10 mm.

In the foregoing technical solution, the distance between the third tail end and the fourth tail end is L₂, satisfying L₂ ≥ 10 mm, to form a long enough and thin winding tail area of the second electrode plate, so that the electrode plates adjacent to the third tail end and the fourth tail end are less prone to local strain, and the problem of cracking of the adjacent electrode plates is alleviated.

In some embodiments of the first aspect of the present application, the second electrode plate further includes a third thinned portion, the third thinned portion and the third active material layer are disposed on a same surface of the second current collector, and the third thinned portion extends from the third tail end in the winding direction, where the thickness of the third thinned portion is smaller than the thickness of the third active material layer.

In the foregoing technical solution, the third thinned portion can cover a portion of the second current collector, so that the second current collector is exposed as little as possible, thereby reducing the risk of a short circuit caused by puncture of the separator, in contact with the second current collector, of the electrode assembly by burrs on the surface of the second current collector, and further improving the safety performance of the battery cell and the battery having the electrode assembly.

In some embodiments of the first aspect of the present application, the thickness of the third thinned portion decreases gradually in the winding direction.

In the foregoing technical solution, the thickness of the third thinned portion decreases gradually in the winding direction, that is, the thickness of the third thinned portion changes gradually, so that the connection positions of the third thinned portion and the third active material layer do not change suddenly in thickness, which reduces the risk of easy local strain of the adjacent electrode plates due to the connection positions of the third thinned portion and the third active material layer.

In some embodiments of the first aspect of the present application, the third thinned portion is an active material layer having a same polarity as the third active material layer.

In the foregoing technical solution, the third thinned portion is an active material layer having the same polarity as the third active material layer, which is beneficial to increasing the energy densities of the battery cell and the battery having the electrode assembly.

In some embodiments of the first aspect of the present application, an expansion coefficient of the third thinned portion is less than that of the third active material layer.

In the foregoing technical solution, the expansion coefficient of the third thinned portion is less than that of the second active material layer, and the third thinned portion is connected to the third tail end, which can constrain expansion of the third active material layer to some extent and reduce the degree of expansion of the third active material layer in the charging and discharging process, thereby reducing the risk of easy local strain of the adjacent electrode plates due to excessive expansion of the third active material layer, and alleviating the problem of cracking of the electrode plates adjacent to the third tail end and the fourth tail end.

In some embodiments of the first aspect of the present application, in the winding direction, the third thinned portion extends from the third tail end in the winding direction to a tail end of the second current collector.

In the foregoing technical solution, the third thinned portion extends to the tail end of the second current collector, and in the winding direction, the surface of the second current collector where the third active material layer is disposed is covered by the third active material layer and the third thinned portion jointly, to reduce the risk of a short circuit caused by puncture of the separator by the burrs on the second current collector.

In some embodiments of the first aspect of the present application, the second electrode plate further includes a fourth thinned portion, the fourth thinned portion and the fourth active material layer are disposed on a same surface of the second current collector, and the fourth thinned portion extends from the fourth tail end in the winding direction, where the thickness of the fourth thinned portion is smaller than the thickness of the fourth active material layer.

In the foregoing technical solution, the fourth thinned portion can cover a portion of the second current collector, so that the second current collector is exposed as little as possible, thereby reducing the risk of a short circuit caused by puncture of the separator, in contact with the second current collector, of the electrode assembly by burrs on the surface of the second current collector, and further improving the safety performance of the battery cell and the battery having the electrode assembly.

In some embodiments of the first aspect of the present application, the thickness of the fourth thinned portion decreases gradually in the winding direction.

In the foregoing technical solution, the thickness of the fourth thinned portion decreases gradually in the winding direction, that is, the thickness of the fourth thinned portion changes gradually, so that the connection positions of the fourth thinned portion and the fourth active material layer do not change suddenly in thickness, which reduces the risk of easy local strain of the adjacent electrode plates due to the connection positions of the fourth thinned portion and the fourth active material layer.

In some embodiments of the first aspect of the present application, the fourth thinned portion is an active material layer having a same polarity as the fourth active material layer.

In the foregoing technical solution, the fourth thinned portion is an active material layer having the same polarity as the fourth active material layer, which is beneficial to increasing the energy densities of the battery cell and the battery having the electrode assembly.

In some embodiments of the first aspect of the present application, an expansion coefficient of the fourth thinned portion is less than that of the fourth active material layer.

In the foregoing technical solution, the expansion coefficient of the fourth thinned portion is less than that of the fourth active material layer, and the fourth thinned portion is connected to the fourth tail end, which can constrain expansion of the fourth active material layer to some extent and reduce the degree of expansion of the fourth active material layer in the charging and discharging process, thereby reducing the risk of easy local strain of the adjacent electrode plates due to excessive expansion of the fourth active material layer, and alleviating the problem of cracking of the electrode plates adjacent to the third tail end and the fourth tail end.

In some embodiments of the first aspect of the present application, in the winding direction, the fourth thinned portion extends from the fourth tail end in the winding direction to the tail end of the second current collector.

In the foregoing technical solution, the fourth thinned portion extends to the tail end of the second current collector, and in the winding direction, the surface of the second current collector where the fourth active material layer is disposed is covered by the fourth active material layer and the fourth thinned portion jointly, to reduce the risk of a short circuit caused by puncture of the separator by the burrs on the second current collector.

In some embodiments of the first aspect of the present application, the first electrode plate is a negative electrode plate, the second electrode plate is a positive electrode plate, the first tail end is located on an outer side of the first current collector and extends beyond the second tail end in the winding direction, and the third tail end is located on an outer side of the second current collector and extends beyond the fourth tail end in the winding direction; and the second tail end extends beyond the third tail end in the winding direction.

In the foregoing technical solution, the second tail end extends beyond the third tail end in the winding direction, so that the second active material layer fully covers the third active material layer, which can reduce the risk of lithium precipitation, thereby improving the safety performance of the battery cell and the battery having the electrode assembly; and fracture of the adjacent electrode plates under severe local force due to the formation of a new large-sized step by the alignment of the second tail end and the second tail end can also be avoided.

In some embodiments of the first aspect of the present application, the first electrode plate is a negative electrode plate, the second electrode plate is a positive electrode plate, the first tail end is located on the outer side of the first current collector and extends beyond the second tail end in the winding direction, and the fourth tail end is located on an inner side of the second current collector and extends beyond the third tail end in the winding direction; and the second tail end extends beyond the third tail end in the winding direction.

In the foregoing technical solution, the second tail end extends beyond the third tail end in the winding direction, which can avoid fracture of the adjacent electrode plates under severe local force due to the formation of a new large-sized step by the alignment of the second tail end and the second tail end, and enables the second active material layer to fully cover the third active material layer, thereby reducing the risk of lithium precipitation in the battery cell and the battery having the electrode assembly and further improving the safety performance of the battery cell and the battery.

In some embodiments of the first aspect of the present application, in the winding direction, a distance between the second end and the third end is L₃, satisfying L₃ ≥ 10 mm.

In the foregoing technical solution, the distance L₃ between the second tail end and the third tail end satisfies L₃ ≥ 10 mm, which can avoid fracture of the adjacent electrode plates under severe local force due to the formation of a new large-sized step by the alignment of the second tail end and the second tail end.

In a second aspect, an embodiment of the present application further provides a battery cell, including the electrode assembly provided by any embodiment of the first aspect.

In the foregoing technical solution, the electrode plates of the electrode assembly provided by any embodiment of the first aspect are less prone to cracking due to local strain on the electrode plates. The battery cell, including the electrode assembly, has a lower risk of a short circuit due to the puncture of the separator by the cracking of the electrode plates. Therefore, the battery cell has good safety.

In a third aspect, an embodiment of the present application provides a battery, including a box and at least one battery cell provided by the embodiment of the second aspect, where the at least one battery cell is accommodated in the box.

In the foregoing technical solution, the battery cell in the embodiment of the second aspect has a lower risk of a short circuit due to the puncture of the separator by the cracking of the electrode plates, and the battery cell has good safety, so the battery with the battery cell, provided by the embodiment of the second aspect, also has good safety.

In a fourth aspect, an embodiment of the present application provides an electrical device, including at least one battery provided by the embodiment of the third aspect.

In the foregoing technical solution, the battery in the embodiment of the third aspect has good safety, so the electrical device, supplied with power by the battery provided by the embodiment of the third aspect, can improve electrical safety.

### Brief description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of an electrode assembly in the prior art;
FIG. 2 is a schematic structural diagram of a vehicle provided by some embodiments of the present application;
FIG. 3 is a schematic structural diagram of a battery provided by some embodiments of the present application;
FIG. 4 is an exploded view of a battery cell provided by some embodiments of the present application;
FIG. 5 is a schematic structural diagram of an electrode assembly provided by some embodiments of the present application;
FIG. 6 is a schematic structural diagram of an electrode assembly provided by other embodiments of the present application;
FIG. 7 is a schematic structural diagram of an electrode assembly provided by still other embodiments of the present application;
FIG. 8 is a schematic structural diagram of an electrode assembly provided by still other embodiments of the present application;
FIG. 9 is a schematic structural diagram of an electrode assembly provided by still other embodiments of the present application;
FIG. 10 is an enlarged view of position A in FIG. 9;
FIG. 11 is a schematic structural diagram of an electrode assembly provided by still other embodiments of the present application;
FIG. 12 is an enlarged view of position B in FIG. 11;
FIG. 13 is a schematic structural diagram of an electrode assembly provided by still other embodiments of the present application;
FIG. 14 is an enlarged view of C in FIG. 13;
FIG. 15 is a schematic structural diagram of an electrode assembly provided by still other embodiments of the present application;
FIG. 16 is an enlarged view of D in FIG. 15;
FIG. 17 is a schematic structural diagram of an electrode assembly provided by some embodiments of the present application;
FIG. 18 is an enlarged view of position E in FIG. 17;
FIG. 19 is a schematic structural diagram of an electrode assembly provided by still other embodiments of the present application;
FIG. 20 is an enlarged view of position F in FIG. 19;
FIG. 21 is a schematic structural diagram of an electrode assembly provided by still other embodiments of the present application;
FIG. 22 is an enlarged view of position G in FIG. 21;
FIG. 23 is a schematic structural diagram of an electrode assembly provided by still other embodiments of the present application;
FIG. 24 is an enlarged view of position H in FIG. 23;
FIG. 25 is a schematic structural diagram of an electrode assembly provided by still other embodiments of the present application;
FIG. 26 is an enlarged view of position J in FIG. 25;
FIG. 27 is a schematic structural diagram of an electrode assembly provided by still other embodiments of the present application;
FIG. 28 is an enlarged view of position K in FIG. 27;
FIG. 29 is a schematic structural diagram of an electrode assembly provided by still other embodiments of the present application; and
FIG. 30 is a schematic structural diagram of an electrode assembly provided by still other embodiments of the present application.

Reference numerals: 1000 - vehicle; 100 - battery; 10 - box; 11 - first portion; 12 - second portion; 20 - battery cell; 21 - shell; 211 - opening; 22', 22 - electrode assembly; 221', 221 - first electrode plate; 2211', 2211 - first current collector; 22111 - first surface; 22112 - second surface; 22113 - tail end of the first current collector; 2212', 2212 - first active material layer; 22121', 22121 - first tail end; 2213', 2213 - second active material layer; 22131', 22131- second tail end; 2214 - first thinned portion; 2215 - second thinned portion; 222', 222 - separator; 223', 223 - second electrode plate; 2231', 2231 - second current collector; 22311 - third surface; 22312 - fourth surface; 22313 - tail end of the second current collector; 2232', 2232 - third active material layer; 22321', 22321 - third tail end; 2233', 2233 - fourth active material layer; 22331', 22331 - fourth tail end; 2234 - third thinned portion; 2235 - fourth thinned portion; 23 - end cover; 24 - electrode terminal; 200 - controller; 300 - motor; X - winding direction.

### Detailed description of Embodiments

In order to make the objectives, technical solutions and advantages of the embodiments of the present application clearer, the technical solutions in the embodiments of the present application will be described clearly and completely below in conjunction with the accompanying drawings in the embodiments of the present application. Apparently, the described embodiments are some of the embodiments of the present application, not all of them. Generally, components of the embodiments of the present application described and shown in the drawings may be arranged and designed with various different configurations.

Therefore, the detailed descriptions of the embodiments of the present application provided in the drawings below are not intended to limit the scope of the present application, but are merely representatives of the selected embodiments of the present application. All other embodiments obtained by those of ordinary skill in the art based on the embodiments of the present application without creative efforts shall fall within the protection scope of the present application.

It should be noted that the embodiments in the present application and the features in the embodiments may be combined with each other on a non-conflict basis.

It should be noted that similar reference numerals and letters in the following drawings represent similar terms, so once a term is defined in a drawing, further definition and explanation are not required in the follow-up drawings.

In the description of the embodiments of the present application, indicative orientations or positional relationships are orientations or positional relationships shown based on the drawings, or commonly placed orientations or positional relationships when the product of the present application is used, or orientations or positional relationships commonly understood by those skilled in the art, are merely for convenience of describing the present application and for simplifying the description, but not for indicating or implying that an indicated apparatus or element must have a specific orientation, and must be constructed and operated in a specific orientation, and therefore, cannot be understood as limiting the present application. In addition, the terms "first", "second", "third", and the like are merely used for distinguishing the description and cannot be construed as indicating or implying relative importance.

At present, in view of the development of the market situation, use of power batteries is increasingly widespread. Power batteries are not only used in energy storage power systems such as hydropower, firepower, wind power, and solar power plants, but also widely used in electric vehicles such as electric bicycles, electric motorcycles, and electric vehicles, as well as in various fields such as military equipment and aerospace. With the continuous expansion of the application fields of power batteries, their market demand is also increasing.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, cubic battery cells, and soft package battery cells, which are also not limited by the embodiments of the present application.

A battery cell includes an electrode assembly. The electrode assembly includes a first electrode plate, a second electrode plate, and a separator. Polarities of the first electrode plate and the second electrode plate are opposite, that is, one of the first electrode plate and the second electrode plate is a positive electrode plate, and the other is a negative electrode plate. The separator is used for separating the first electrode plate and the second electrode plate to avoid a contact short circuit between the first electrode plate and the second electrode plate. The first electrode plate, the second electrode plate, and the separator may be wound to form a wound electrode assembly. The first electrode plate, the second electrode plate, and the separator may be laminated to form a laminated electrode assembly.

The development of battery technologies needs to consider various design factors simultaneously, such as energy density, cycle life, discharge capacity, charge and discharge rate, and other performance parameters of batteries. In addition, safety of the batteries should also be considered.

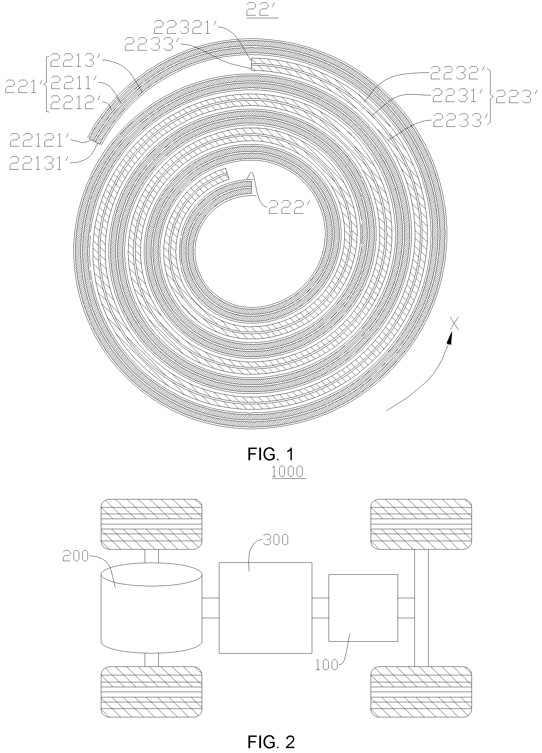

The inventor found that, as shown in FIG. 1, for a wound electrode assembly 22', a first electrode plate 221' includes a first current collector 2211', a first active material layer 2212', and a second active material layer 2213'; the first active material layer 2212' and the second active substance layer 2213' are disposed on two opposite surfaces of the first current collector 2211' respectively; a first tail end 22121' of the first active material layer 2212' and a second tail end 22131' of the second active material layer 2213' are flush in a winding direction X, so that the first tail end 22121' and the second tail end 22131' jointly form a large-sized step; in an expansion process of the electrode assembly 22', the first tail end 22121' and the second tail end 22131' generate large shear stress on adjacent electrode plates, so that the electrode plates adjacent to the first tail end 22121' and the second tail end 22131' generate local strain, and the adjacent electrode plates are squeezed and fractured accordingly; a second electrode plate 223' includes a second current collector 2231', a third active material layer 2232', and a third active material layer 2232'; the third active material layer 2232' and the fourth active material layer 2233' are disposed on two opposite surfaces of the second current collector 2231' respectively; a third tail end 22321' of the third active material layer 2232' and a fourth tail end 22331' of the fourth active material layer 2233' are flush in the winding direction X, so that the third tail end 22321' and the fourth tail end 22331' jointly form a large-sized step; and in the expansion process of the electrode assembly 22', the third tail end 22321' and the fourth tail end 22331' generate large shear stress on the adjacent electrode plates, so that the electrode plates adjacent to the third tail end 22321' and the fourth tail end 22331' generate local strain, and the adjacent electrode plates are squeezed and fractured accordingly. For example, as shown in FIG. 1, the first electrode plate 221' is a negative electrode plate, the second electrode plate 223' is a positive electrode plate, the first tail end 22121' and the second tail end 22131' are located on outer sides of the third tail end 22321' and the fourth tail end 22331', and the first tail end 22121' and the second tail end 22131' extend beyond the third tail end 22321' and the fourth tail end 22331' in the winding direction X. When the electrode assembly 22' expands, the second tail end 22131' generates large shear stress on the inner electrode plate (the first electrode plate 221'), the third tail end 22321' generates large shear stress on the outer electrode plate (the first electrode plate 221'), and the fourth tail end 22331' generates large shear stress on the inner electrode plate (the first electrode plate 221'), so that the electrode plates generate local strain and the adjacent electrode plates are squeezed and cracked or fractured accordingly. The cracked or fractured electrode plates may generate burrs, which easily puncture a separator 222' to cause a risk of a short circuit, thereby causing safety problems of a battery cell having the electrode assembly 22'.

Based on the foregoing considerations, in order to alleviate the safety problems of a battery cell and a battery having an electrode assembly in which electrode plates are squeezed and cracked or fractured by large shear stress, the inventor conducted in-depth research and designed an electrode assembly, in a winding direction of which, a first tail end of a first active material layer and a second tail end of a second active material layer of a first electrode plate of the electrode assembly are misaligned.

The first tail end of the first active material layer and the second tail end of the second active material layer, disposed on two opposite surfaces of a first current collector, are misaligned in the winding direction of the electrode assembly, and a thin area is formed between the first tail end and the second tail end of the first electrode plate, which can reduce the thickness of a winding tail area of the first electrode plate and reduce shear stress of the winding tail area of the first electrode plate on adjacent electrode plates in an expansion process of the electrode assembly, so that the electrode plates adjacent to the winding tail area of the first electrode plate are less prone to local strain, thereby alleviating the problem of cracking of the adjacent electrode plates in the presence of the winding tail area of the first electrode plate, reducing the risk of a short circuit caused by puncture of a separator due to the cracking of the electrode plates, and improving the safety performance of a battery cell and a battery having the electrode assembly.

The battery cell having the electrode assembly provided by the embodiments of the present application may be used, but is not limited to, in an electrical device such as a vehicle, a ship, or an aircraft. Alternatively, the battery cell, battery, or the like having the electrode assembly disclosed by the present application may constitute a power system of the electrical device, which is beneficial to increasing energy densities of the battery cell and the battery.

An embodiment of the present application provides an electrical device using a battery as a power supply. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

With reference to FIG. 2, the vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

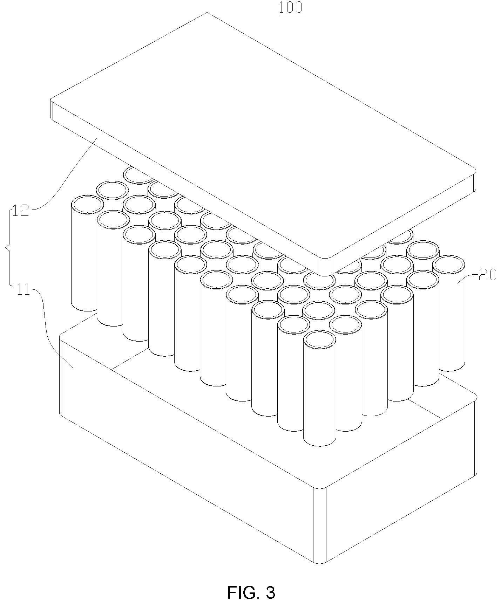

With reference to FIG. 3, the battery 100 includes a box 10 and battery cells 20, where the battery cells 20 are accommodated in the box 10. The box 10 is used for providing an accommodating space for the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end to form an accommodating cavity for accommodating the battery cells 20, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side to form an accommodating cavity for accommodating the battery cells 20, and the open side of the first portion 11 covers the open side of the second portion 12. Of course, the box 10 formed by the first portion 11 and the second portion 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

In some embodiments, the battery 100 may further include a current collecting component (not shown), and the plurality of battery cells 20 may be electrically connected through the current collecting component to implement the parallel, series, or series-parallel connection of the plurality of battery cells 20.

Each battery cell 20 may be a secondary battery or a primary battery, or may be a lithium-sulfur battery, a sodium-ion battery, or a magnesium-ion battery, but is not limited to this. The battery cells 20 may be flat, cuboid, or in other shapes.

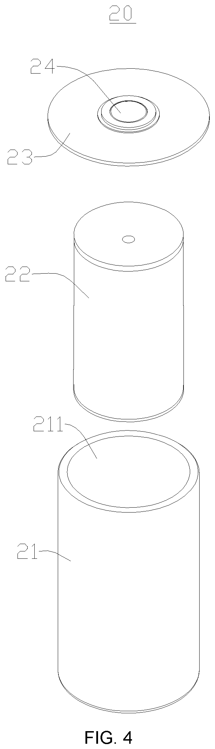

With reference to FIG. 4, the battery cell 20 may include a shell 21, an electrode assembly 22, and an end cover 23. The shell 21 has an opening 211, the electrode assembly 22 is accommodated in the shell 21, and the end cover 23 is used for covering the opening 211.

The shell 21 may be in various shapes, such as square or cylindrical. A contour of the electrode assembly 22 may be adapted to the structural shape of the shell 21. For example, if the electrode assembly 22 is cylindrical, the shell 21 may be cylindrical; or if the electrode assembly 22 is square, the shell 21 may be square. FIG. 4 shows that both the electrode assembly 22 and the shell 21 are cylindrical.

A material of the shell 21 may be various, such as copper, iron, aluminum, stainless steel, or aluminum alloy, and is not specially limited in the embodiments of the present application.

The end cover 23 refers to a component that is closed to the opening 211 of the shell 21 to isolate an internal environment of the battery cell 20 from an external environment. Unlimitedly, a shape of the end cover 23 may adapt to that of the shell 21 to fit the shell 21. Optionally, the end cover 23 may be made of a material with certain hardness and strength (such as aluminum alloy). In this case, the end cover 23 is less prone to deformation during squeezing deformation, so that the battery cell 20 can have higher structural strength and its safety can be improved. The end cover 23 is used for covering the opening 211 of the shell 21 to form a closed mounting space (not shown), and the mounting space is used for accommodating the electrode assembly 22. The mounting space is further used for accommodating an electrolyte, such as an electrolytic solution.

An electrode terminal 24 for outputting electrical energy of the electrode assembly 22 is further disposed on the end cover 23, and the electrode terminal 24 is used for electrical connection with the electrode assembly 22, that is, the electrode terminal 24 is electrically connected to a tab (not shown) of the electrode assembly 22, for example, the electrode terminal 24 is connected to the tab through a current collecting component (not shown) to achieve the electrical connection between the electrode terminal 24 and the tab.

It should be noted that the shell 21 may have one or two openings 211. If the shell 21 has one opening 211, there may also be one end cover 23, two electrode terminals 24 may be disposed in the end cover 23, the two electrode terminals 24 are a positive electrode terminal and a negative electrode terminal respectively, the positive electrode terminal and the negative electrode terminal are used for electrical connection with a positive tab (not shown) and a negative tab (not shown) of the electrode assembly 22 respectively, and the two electrode terminals 24 in the end cover 23 are the positive electrode terminal and the negative electrode terminal respectively. In an embodiment of one end cover 23, the electrode terminal 24 is disposed on the end cover 23 in an insulated manner. One of the positive tab and negative tab of the electrode assembly 22 is electrically connected to the electrode terminal 24 on the end cover 23, while the other may be electrically connected to the shell 21.

If the shell 21 has two openings 211, for example, the two openings 211 are disposed on two opposite sides of the shell 21, there may also be two end covers 23, and the two end covers 23 cover the two openings 211 of the shell 21 respectively. In this case, the electrode terminal 24 in one end cover 23 is a positive electrode terminal used for electrical connection with the positive tab of the electrode assembly 22; and the electrode terminal 24 in the other end cover 23 is a negative electrode terminal used for electrical connection with the negative electrode plate of the electrode assembly 22.

A material of the end cover 23 may be various, such as copper, iron, aluminum, stainless steel, aluminum alloy, or plastic, and is not specially limited in the embodiments of the present application.

The shell 21 and the end cover 23 may be independent components, and the opening 211 may be disposed on the shell 21. At the opening 211, the end cover 23 is closed to the opening 211 to form the internal environment of the battery cell 20. Unlimitedly, the end cover 23 and the shell 21 may be integrated. Specifically, the end cover 23 and the shell 21 may form a common connection surface before other components are assembled into the shell. When the interior of the shell 21 is to be packaged, the end cover 23 is closed to the shell 21.

A pressure relief mechanism (not shown) may further be disposed on the end cover 23, and the pressure relief mechanism is used for releasing pressure inside the battery cell 20 when the pressure or temperature inside the battery cell 20 reaches a threshold. The pressure relief mechanism 25 may be in a form of an explosion-proof valve, a rupture disc, a gas valve, a pressure relief valve, a safety valve, a weak portion formed on the end cover 23, or the like.

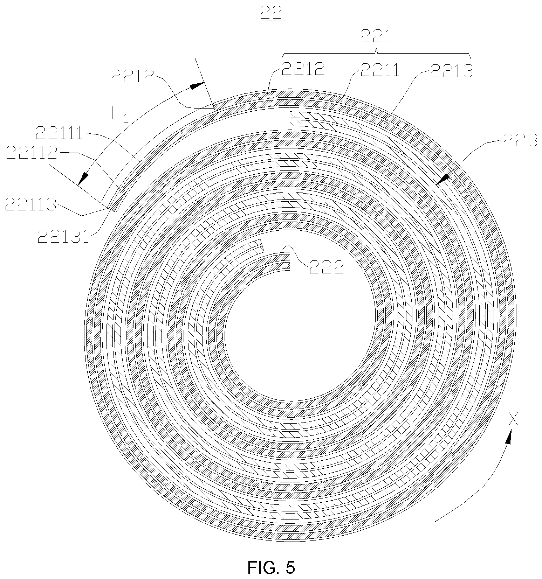

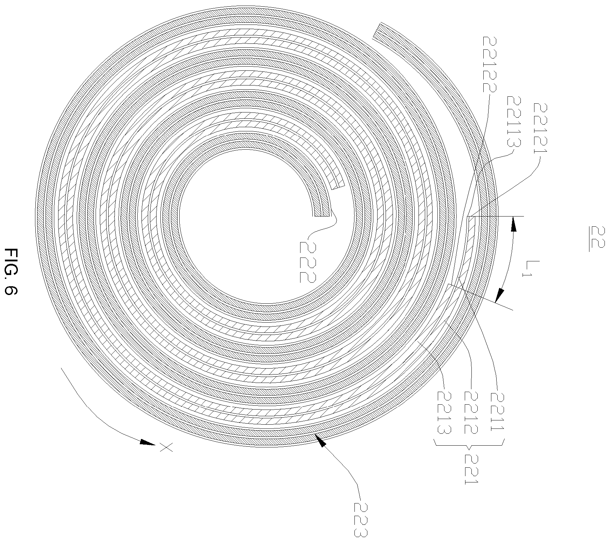

As shown in FIG. 5 and FIG. 6, the electrode assembly 22 is of a wound structure, the electrode assembly 22 includes a first electrode plate 221; the first electrode plate 221 includes a first current collector 2211, a first active material layer 2212, and a second active material layer 2213; and the first active material layer 2212 and the second active material layer 2213 are disposed on two opposite surfaces of the first current collector 2211 respectively, where the first active material layer 2212 has a first tail end 22121, the second active material layer 2213 has a second tail end 22131, and the first tail end 22121 and the second tail end 22131 are misaligned in a winding direction X of the electrode assembly 22.

The first active material layer 2212 and the second active material layer 2213 are disposed on the two opposite surfaces of the first current collector 2211 in its thickness direction, defined as a first surface 22111 and a second surface 22112, respectively. The second surface 22112 is closer to a winding center of the electrode assembly 22 than the first surface 22111. The first active material layer 2212 is disposed on the first surface 22111, and the second active material layer 2213 is disposed on the second surface 22112. That is, the second active material layer 2213 is disposed on an inner side of the first current collector 2211, and the first active material layer 2212 is disposed on an outer side of the first current collector 2211.

The first tail end 22121 is an end of the first active material layer 2212 in the winding direction X, and the second tail end 22131 is an end of the second active material layer 2213 in the winding direction X. The expression "the first tail end 22121 and the second tail end 22131 are misaligned" refers to a distance between the first tail end 22121 and the second tail end 22131 in the winding direction X.

The first electrode plate 221 may be either a positive electrode plate or a negative electrode plate. If the first electrode plate 221 is a positive electrode plate, the first current collector 2211 is a positive electrode current collector, and the first active material layer 2212 and the second active material layer 2213 are both positive electrode active material layers; and taking a lithium-ion battery 100 as an example, the material of the positive electrode current collector may be aluminum, and the positive electrode active material layer may be made of lithium cobalt oxide, lithium iron phosphate, ternary lithium, lithium manganese oxide, or the like. If the first electrode plate 221 is a negative electrode plate, the first current collector 2211 is a negative electrode current collector, and the first active material layer 2212 and the second active material layer 2213 are both negative electrode active material layers; and taking a lithium-ion battery 100 as an example, the material of the positive electrode current collector may be copper, and the negative electrode active material layer may be made of carbon, silicon, or the like. FIG. 5 shows that the first electrode plate 221 is a negative electrode plate. FIG. 6 shows that the first electrode plate 221 is a positive electrode plate.

The first tail end 22121 of the first active material layer 2212 and the second tail end 22131 of the second active material layer 2213, disposed on the two opposite surfaces of the first current collector 2211, are misaligned in the winding direction X of the electrode assembly 22, and a thin area is formed between the first tail end 22121 and the second tail end 22131 of the first electrode plate 221, which can reduce the thickness of a winding tail area of the first electrode plate 221 and reduce shear stress of the winding tail area of the first electrode plate 221 on adjacent electrode plates in an expansion process of the electrode assembly 22, so that the electrode plates adjacent to the winding tail area of the first electrode plate 221 are less prone to local strain, thereby alleviating the problem of cracking of the adjacent electrode plates in the presence of the winding tail area of the first electrode plate 221, reducing the risk of a short circuit caused by puncture of a separator 222 due to the cracking of the electrode plates, and improving the safety performance of a battery cell 20 and a battery 100 having the electrode assembly 22.

With continued reference to FIG. 5 and FIG. 6, in the winding direction X, the distance between the first tail end 22121 and the second tail end 22131 is L₁, satisfying L₁ ≥ 10 mm.

L₁ may be 11 mm, 12 mm, 13 mm, 15 mm, 16 mm, 18 mm, 20 mm, or the like.

The distance between the first tail end 22121 and the second tail end 22131 is L₁, satisfying L₁ ≥ 10 mm, to form a long enough and thin winding tail area of the first electrode plate 221, so that the electrode plates adjacent to the first tail end 22121 and the second tail end 22131 are less prone to local strain, and the problem of cracking of the adjacent electrode plates is alleviated.

Because the first tail end 22121 and the second tail end 22131 are misaligned in the winding direction X, one of the first tail end 22121 and the second tail end 22131 exceeds beyond the other in the winding direction X, that is, one of the first tail end 22121 and the second tail end 22131 is located in front of the other in the winding direction X. FIG. 5 shows that the second tail end 22131 extends beyond the first tail end 22121 in the winding direction X, namely, the second tail end 22131 is located in front of the first tail end 22121 in the winding direction X. FIG. 6 shows that the first tail end 22121 extends beyond the second tail end 22131 in the winding direction X, namely, the first tail end 22121 is located in front of the second tail end 22131 in the winding direction X.

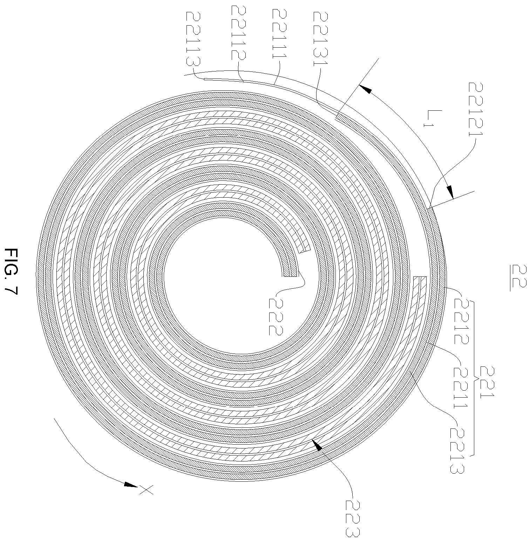

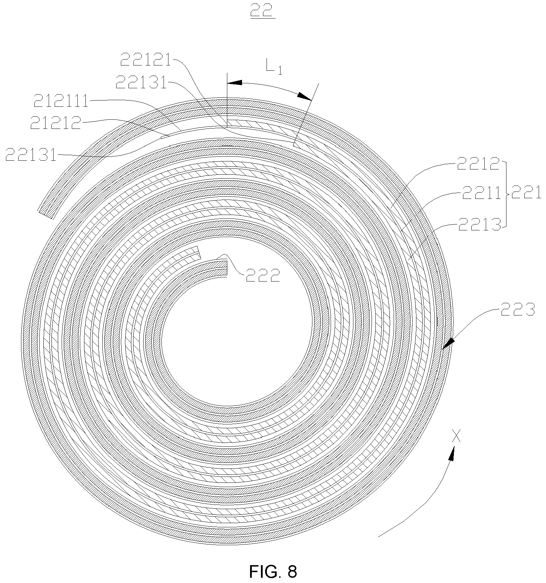

The first current collector 2211 has a tail end, and the tail end 22113 of the first current collector is an end of the first current collector 2211 in the winding direction X. As shown in FIG. 5 and FIG. 6, the tail end 22113 of the first current collector may be flush with the front one of the first tail end 22121 and the second tail end 22131. As shown in FIG. 7 and FIG. 8, the tail end 22113 of the first current collector may alternatively extend beyond the front one of the first tail end 22121 and the second tail end 22131 in the winding direction X.

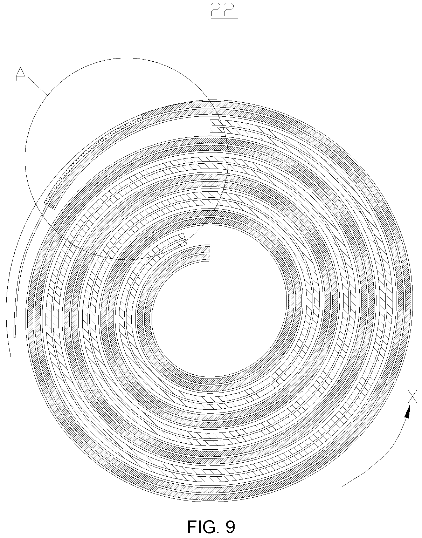

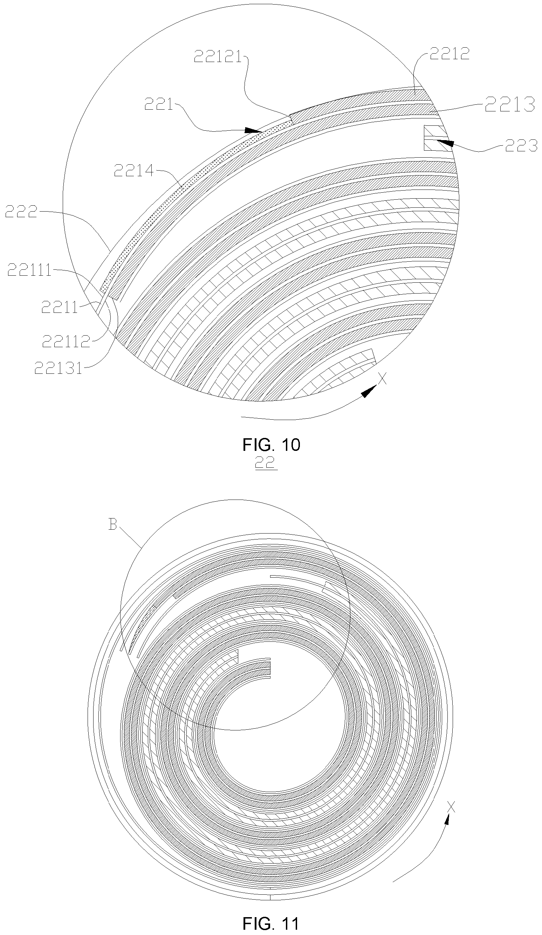

As shown in FIG. 9 and FIG. 10, in some embodiments, the first electrode plate 221 further includes a first thinned portion 2214, the first thinned portion 2214 and the first active material layer are disposed on a same surface of the first current collector 2211, and the first thinned portion 2214 extends from the first tail end 22121 in the winding direction X, where the thickness of the first thinned portion is smaller than the thickness of the first active material layer 2212.

The first thinned portion 2214 is connected to the first tail end 22121, and the first thinned portion 2214 is disposed on a portion of the first surface 22111 that extends beyond the first tail end 22121 in the winding direction X.

As shown in FIG. 10, the first thinned portion 2214 may be of an equal-thickness structure.

In other embodiments, the first thinned portion 2214 may alternatively be of an unequal-thickness structure. In an embodiment where the first thinned portion 2214 is of an unequal-thickness structure, a maximum thickness of the first thinned portion 2214 is less than a thickness of the first active material layer.

The first thinned portion 2214 can cover a portion of the first current collector 2211, so that the first current collector 2211 is exposed as little as possible, thereby reducing the risk of a short circuit caused by puncture of the separator 222, in contact with the first current collector 2211, of the electrode assembly 22 by burrs on the surface of the first current collector 2211, and further improving the safety performance of the battery cell 20 and the battery 100 having the electrode assembly 22.

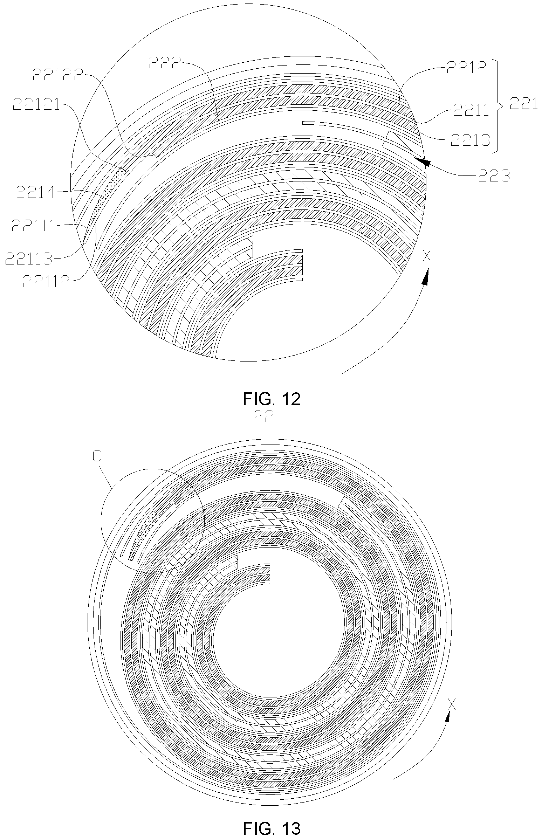

The first thinned portion 2214 may be in various forms of unequal-thickness structures. As shown in FIG. 11 and FIG. 12, the thickness of the first thinned portion 2214 decreases gradually in the winding direction X.

A surface, away from the first surface 22111, of the first thinned portion 2214 tilts in the winding direction X, so that the thickness of the first thinned portion 2214 decreases gradually in the winding direction X.

The thickness of the first thinned portion 2214 decreases gradually in the winding direction X, that is, the thickness of the first thinned portion 2214 changes gradually, so that the connection positions of the first thinned portion 2214 and the first active material layer 2212 do not change suddenly in thickness, which reduces the risk of easy local strain of the adjacent electrode plates due to the connection positions of the first thinned portion 2214 and the first active material layer 2212.

A material of the first thinned portion 2214 may be the same as or different from that of the first active material layer 2212. In some embodiments, the first thinned portion 2214 is an active material layer having a same polarity as the first active material layer 2212.

Understandably, if the first active material layer 2212 is a positive electrode active material layer, the first thinned portion 2214 is also a positive electrode active material layer; or if the first active material layer 2212 is a negative electrode active material layer, the first thinned portion 2214 is also a negative electrode active material layer.

The first thinned portion 2214 is an active material layer having the same polarity as the first active material layer 2212, which is beneficial to increasing energy densities of the battery cell 20 and the battery 100 having the electrode assembly 22.

In some embodiments, an expansion coefficient of the first thinned portion 2214 is less than that of the first active material layer 2212.

The expansion coefficient is a physical quantity that represents thermal expansion properties of an object, that is, an increase in length, area, or volume of the object when heated. For the first thinned portion 2214 and the first active material layer 2212, the expansion coefficient is a physical quantity that represents an increase in length, area, or volume of the first thinned portion 2214 and the first active material layer 2212 in a charging and discharging process.

In a case that the first thinned portion 2214 is an active material layer having the same polarity as the first active material layer 2212, the expansion coefficient of the first thinned portion 2214 may be less than that of the first active material layer 2212 by changing some ingredients, a proportion of ingredients, or the like of the material of the first thinned portion 2214.

In a case that the material of the first thinned portion 2214 is different from the material of the first active material layer 2212, that is, the material of the first thinned portion 2214 is not an active material, the expansion coefficient of the material of the first thinned portion 2214 may be less than the expansion coefficient of the first active material layer 2212.

The expansion coefficient of the first thinned portion 2214 is less than that of the first active material layer 2212, and the first thinned portion 2214 is connected to the first tail end 22121, which can constrain expansion of the first active material layer 2212 to some extent and reduce the degree of expansion of the first active material layer 2212 in the charging and discharging process, thereby reducing the risk of easy local strain of the electrode plate adjacent to the first tail end 22121 due to excessive expansion of the first active material layer 2212, and alleviating the problem of cracking of the electrode plates adjacent to the first tail end 22121 and the second tail end 22131.

With continued reference to FIG. 12, in some embodiments, the first thinned portion 2214 extends from the first tail end 22121 in the winding direction X to the tail end 22113 of the first current collector.

Understandably, in the winding direction X, the tail end 22113 of the first current collector is flush with an end, away from the first tail end 22121, of the first thinned portion 2214.

The first thinned portion 2214 extends to the tail end 22113 of the first current collector, and in the winding direction X, the surface of the first current collector 2211 where the first active material layer 2212 is disposed is covered by the first active material layer 2212 and the first thinned portion 2214, to reduce the risk of a short circuit caused by puncture of the separator 222 by the burrs on the first current collector 2211.

In other embodiments, the first thinned portion 2214 may not extend from the first tail end 22121 in the winding direction X to the tail end 22113 of the first current collector, that is, the tail end 22113 of the first current collector extends beyond the end, away from the first tail end 22121, of the first thinned portion 2214 in the winding direction X.

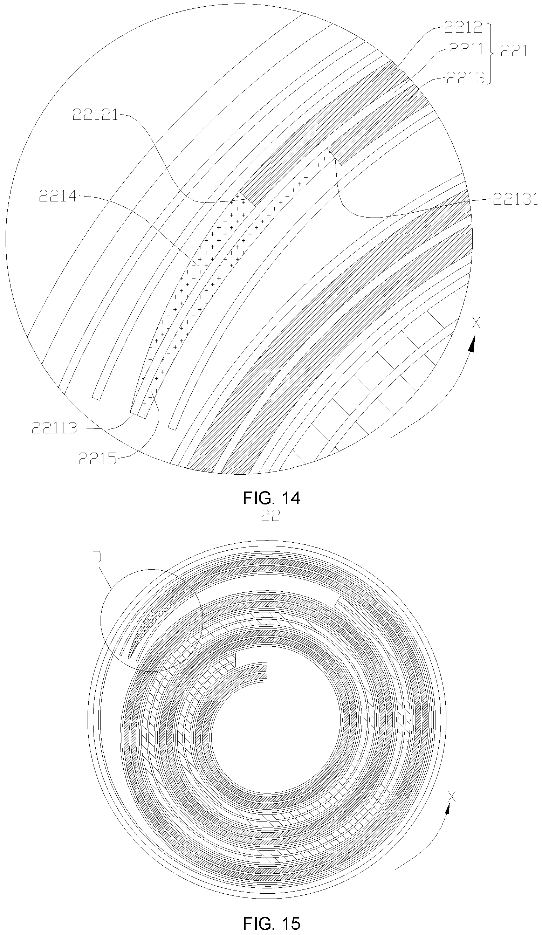

As shown in FIG. 13 and FIG. 14, in some embodiments, the first electrode plate 221 further includes a second thinned portion 2215, the second thinned portion 2215 and the second active material layer are disposed on a same surface of the first current collector 2211, and the second thinned portion 2215 extends from the second tail end 22131 in the winding direction X, where the thickness of the second thinned portion is smaller than the thickness of the second active material layer 2213.

The second thinned portion 2215 is connected to the second tail end 22131, and the second thinned portion 2215 is disposed on a portion of the second surface 22112 that extends beyond the second tail end 22131 in the winding direction X.

As shown in FIG. 14, the second thinned portion 2215 may be of an equal-thickness structure.

In other embodiments, the second thinned portion 2215 may alternatively be of an unequal-thickness structure. In an embodiment where the second thinned portion 2215 is of an unequal-thickness structure, a maximum thickness of the second thinned portion 2215 is less than a thickness of the second active material layer.

The second thinned portion 2215 can cover a portion of the first current collector 2211, so that the first current collector 2211 is exposed as little as possible, thereby reducing the risk of a short circuit caused by puncture of the separator 222, in contact with the first current collector 2211, of the electrode assembly 22 by burrs on the surface of the first current collector 2211, and further improving the safety performance of the battery cell 20 and the battery 100 having the electrode assembly 22.

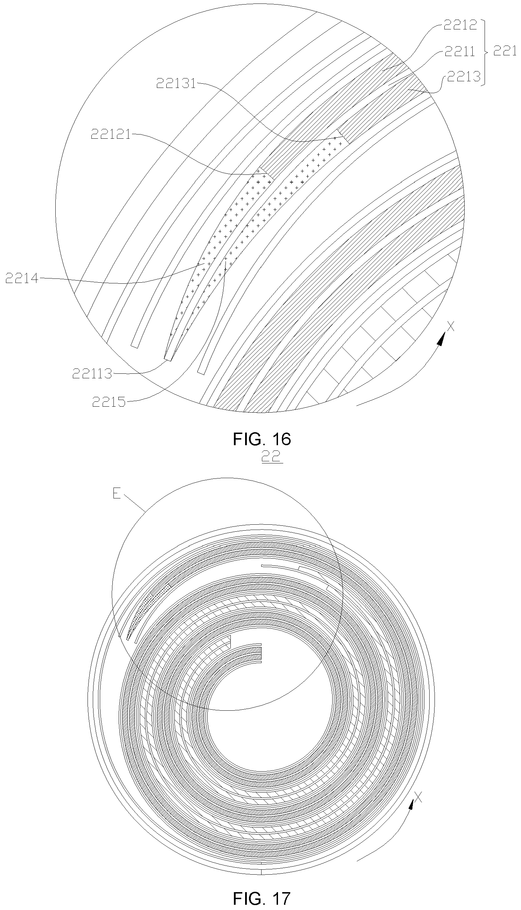

The second thinned portion 2215 may be in various forms of unequal-thickness structures. As shown in FIG. 15 and FIG. 16, the thickness of the second thinned portion 2215 decreases gradually in the winding direction X.

A surface, away from the second surface 22112, of the second thinned portion 2215 tilts in the winding direction X, so that the thickness of the second thinned portion 2215 decreases gradually in the winding direction X.

The thickness of the second thinned portion 2215 decreases gradually in the winding direction X, that is, the thickness of the second thinned portion 2215 changes gradually, so that the connection positions of the second thinned portion 2215 and the second active material layer 2213 do not change suddenly in thickness, which reduces the risk of easy local strain of the adjacent electrode plates due to the connection positions of the second thinned portion 2215 and the second active material layer 2213.

A material of the second thinned portion 2215 may be the same as or different from that of the second active material layer 2213. In some embodiments, the second thinned portion 2215 is an active material layer having a same polarity as the second active material layer 2213.

Understandably, if the second active material layer 2213 is a positive electrode active material layer, the second thinned portion 2215 is also a positive electrode active material layer; or if the second active material layer 2213 is a negative electrode active material layer, the second thinned portion 2215 is also a negative electrode active material layer.

The second thinned portion 2215 is an active material layer having the same polarity as the second active material layer 2213, which is beneficial to increasing the energy densities of the battery cell 20 and the battery 100 having the electrode assembly 22.

In some embodiments, an expansion coefficient of the second thinned portion 2215 is less than that of the second active material layer 2213.

For the second thinned portion 2215 and the second active material layer 2213, the expansion coefficient is a physical quantity that represents an increase in length, area, or volume of the second thinned portion 2215 and the second active material layer 2213 in the charging and discharging process.

In a case that the second thinned portion 2215 is an active material layer having the same polarity as the second active material layer 2213, the expansion coefficient of the second thinned portion 2215 may be less than that of the second active material layer 2213 by changing some ingredients, a proportion of ingredients, or the like of the material of the second thinned portion 2215.

In a case that the material of the second thinned portion 2215 is different from the material of the second active material layer 2213, that is, the material of the second thinned portion 2215 is not an active material, the expansion coefficient of the material of the second thinned portion 2215 may be less than the expansion coefficient of the second active material layer 2213.

The expansion coefficient of the second thinned portion 2215 is less than that of the second active material layer 2213, and the second thinned portion 2215 is connected to the second tail end 22131, which can constrain expansion of the second active material layer 2213 to some extent and reduce the degree of expansion of the second active material layer 2213 in the charging and discharging process, thereby reducing the risk of easy local strain of the adjacent electrode plates due to excessive expansion of the second active material layer 2213, and alleviating the problem of cracking of the electrode plates adjacent to the first tail end 22121 and the second tail end 22131.

As shown in FIG. 16, in some embodiments, in the winding direction X, the second thinned portion 2215 extends from the second tail end 22131 in the winding direction X to the tail end 22113 of the first current collector.

Understandably, in the winding direction X, the tail end 22113 of the first current collector is flush with an end, away from the second tail end 22131, of the second thinned portion 2215.

The second thinned portion 2215 extends to the tail end 22113 of the first current collector, and in the winding direction X, the surface of the first current collector 2211 where the second active material layer 2213 is disposed is covered by the second active material layer 2213 and the second thinned portion 2215 jointly, to reduce the risk of a short circuit caused by puncture of the separator 222 by the burrs on the first current collector 2211.

In other embodiments, the second thinned portion 2215 may not extend from the second tail end 22131 in the winding direction X to the tail end 22113 of the first current collector, that is, the tail end 22113 of the first current collector extends beyond the end, away from the second tail end 22131, of the second thinned portion 2215 in the winding direction X.

As shown in FIG. 17, in some embodiments, the electrode assembly 22 further includes a separator 222 and a second electrode plate 223 laminated and wound with the first electrode plate 221, the second electrode plate 223 has a polarity opposite to that of the first electrode plate 221, and the separator 222 is sandwiched between the first electrode plate 221 and the second electrode plate 223; the second electrode plate 223 includes a second current collector 2231, a third active material layer 2232, and a fourth active material layer 2233; and the third active material layer 2232 and the fourth active material layer 2233 are disposed on two opposite surfaces of the second current collector 2231 respectively, where the third active material layer 2232 has a third tail end 22321, the fourth active material layer 2233 has a fourth tail end 22331, and the first tail end 22121 and the second tail end 22131 are misaligned in the winding direction X.

If the first electrode plate 221 is a positive electrode plate, the second electrode plate 223 is a negative electrode plate; or if the first electrode plate 221 is a negative electrode plate, the second electrode plate 223 is a positive electrode plate. The separator 222 is laminated between the first electrode plate 221 and the second electrode plate 223 to insulate and separate the first electrode plate 221 and the second electrode plate 223. A material of the separator 222 may be polypropylene (PP), polyethylene (PE), or the like.

The third active material layer 2232 and the fourth active material layer 2233 are disposed on the two opposite surfaces of the second current collector 2231 in its thickness direction, defined as a third surface 22311 and a fourth surface 22312, respectively. The fourth surface 22312 is closer to the winding center of the electrode assembly 22 than the third surface 22311. The third active material layer 2232 is disposed on the third surface 22311, and the fourth active material layer 2233 is disposed on the fourth surface 22312. That is, the fourth active material layer 2233 is disposed on an inner side of the second current collector 2231, and the third active material layer 2232 is disposed on an outer side of the second current collector 2231.

The third tail end 22321 is an end of the third active material layer 2232 in the winding direction X, and the fourth tail end 22331 is an end of the fourth active material layer 2233 in the winding direction X. The expression "the third tail end 22321 and the fourth tail end 22331 are misaligned" refers to a distance between the third tail end 22321 and the fourth tail end 22331 in the winding direction X.

The third tail end 22321 of the third active material layer 2232 and the fourth tail end 22331 of the fourth active material layer 2233, disposed on the two opposite surfaces of the second current collector 2231, are misaligned in the winding direction X of the electrode assembly 22, and a thin area is formed between the third tail end 22321 and the third tail end 22321 of the second electrode plate 223, which can reduce the thickness of a winding tail area of the second electrode plate 223 and reduce shear stress of the winding tail area of the second electrode plate 223 on the adjacent electrode plates in the expansion process of the electrode assembly 22, so that the electrode plates adjacent to the winding tail area of the second electrode plate 223 are less prone to local strain, thereby alleviating the problem of cracking of the adjacent electrode plates in the presence of the winding tail area of the second electrode plate 223, reducing the risk of a short circuit caused by puncture of the separator 222 due to the cracking of the electrode plates, and improving the safety performance of the battery cell 20 and the battery 100 having the electrode assembly 22.

In some embodiments, in the winding direction X, the distance between the third tail end 22321 and the fourth tail end 22331 is L₂, satisfying L₂ ≥ 10 mm.

L₂ may be 11 mm, 12 mm, 13 mm, 15 mm, 16 mm, 18 mm, 20 mm, or the like.

The distance between the third tail end 22321 and the fourth tail end 22331 is L₂, satisfying L₂ ≥ 10 mm, to form a long enough and thin winding tail area of the second electrode plate 223, so that the electrode plates adjacent to the third tail end 22321 and the fourth tail end 22331 are less prone to local strain, and the problem of cracking of the adjacent electrode plates is alleviated.

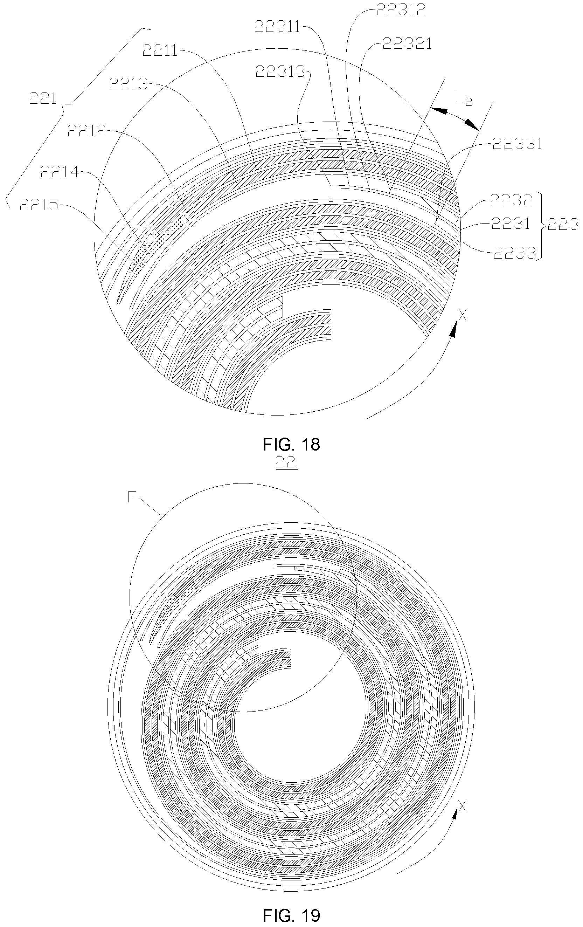

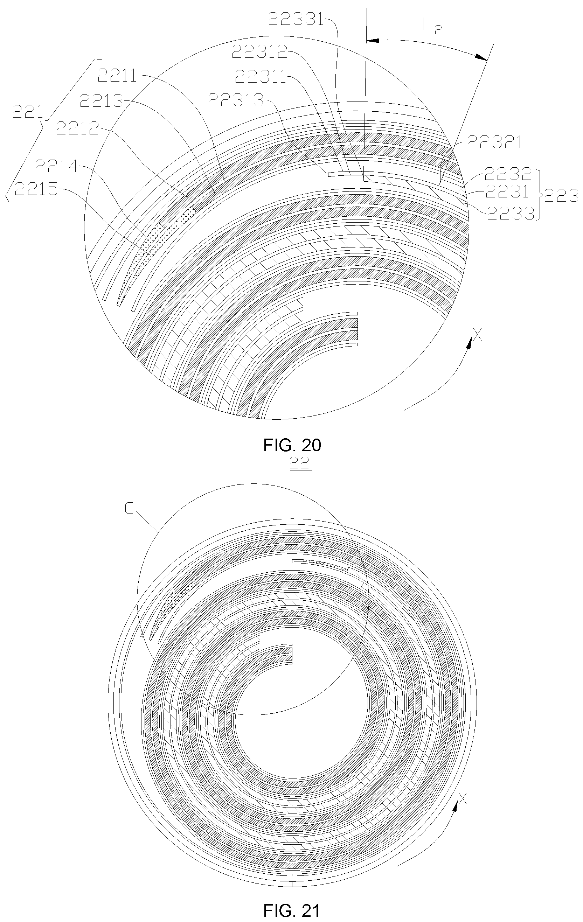

Because the third tail end 22321 and the fourth tail end 22331 are misaligned in the winding direction X, one of the third tail end 22321 and the fourth tail end 22331 exceeds beyond the other in the winding direction X, that is, one of the third tail end 22321 and the fourth tail end 22331 is located in front of the other in the winding direction X. FIG. 18 shows that the third tail end 22321 extends beyond the fourth tail end 22331 in the winding direction X, namely, the third tail end 22321 is located in front of the fourth tail end 22331 in the winding direction X. FIG. 19 and FIG. 20 show that the fourth tail end 22331 extends beyond the third tail end 22321 in the winding direction X, namely, the fourth tail end 22331 is located in front of the third tail end in the winding direction X.

The second current collector 2231 has a tail end, and the tail end 22313 of the second current collector is an end of the second current collector 2231 in the winding direction X. The tail end 22313 of the second current collector may be flush with the front one of the third tail end 22321 and the fourth tail end 22331. As shown in FIG. 18 and FIG. 20, the tail end 22313 of the second current collector may alternatively extend beyond the front one of the third tail end 22321 and the fourth tail end 22331 in the winding direction X.

In some embodiments, the second electrode plate 223 further includes a third thinned portion 2234, the third thinned portion 2234 and the third active material layer are disposed on a same surface of the second current collector 2231, and the third thinned portion 2234 extends from the third tail end 22321 in the winding direction X, where the thickness of the third thinned portion is smaller than the thickness of the third active material layer 2232.

The third thinned portion 2234 is connected to the third tail end 22321, and the third thinned portion 2234 is disposed on a portion of the third surface 22311 that extends beyond the third tail end 22321 in the winding direction X.

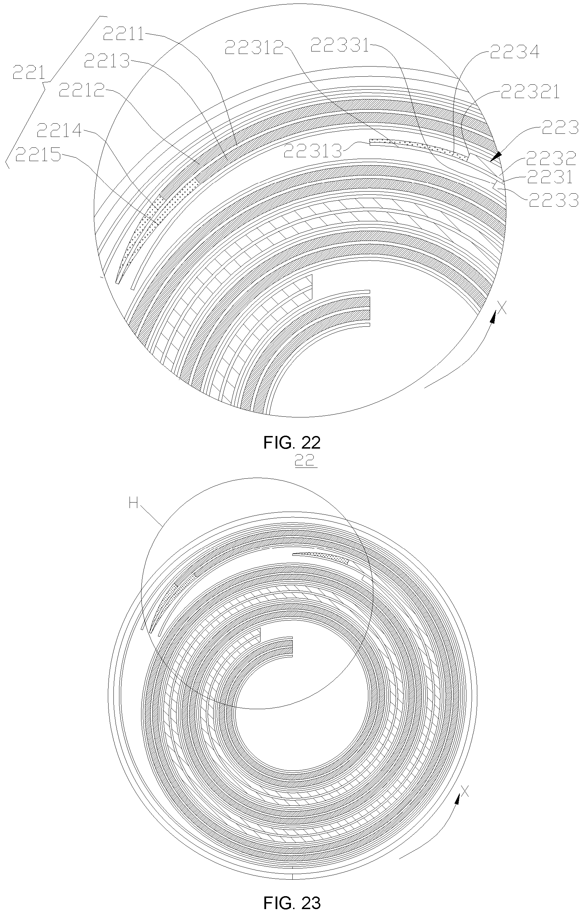

As shown in FIG. 22, the third thinned portion 2234 may be of an equal-thickness structure.

In other embodiments, the third thinned portion 2234 may alternatively be of an unequal-thickness structure. In an embodiment where the third thinned portion 2234 is of an unequal-thickness structure, a maximum thickness of the third thinned portion 2234 is less than a thickness of the third active material layer.

The third thinned portion 2234 can cover a portion of the second current collector 2231, so that the second current collector 2231 is exposed as little as possible, thereby reducing the risk of a short circuit caused by puncture of the separator 222, in contact with the second current collector 2231, of the electrode assembly 22 by burrs on the surface of the second current collector 2231, and further improving the safety performance of the battery cell 20 and the battery 100 having the electrode assembly 22.

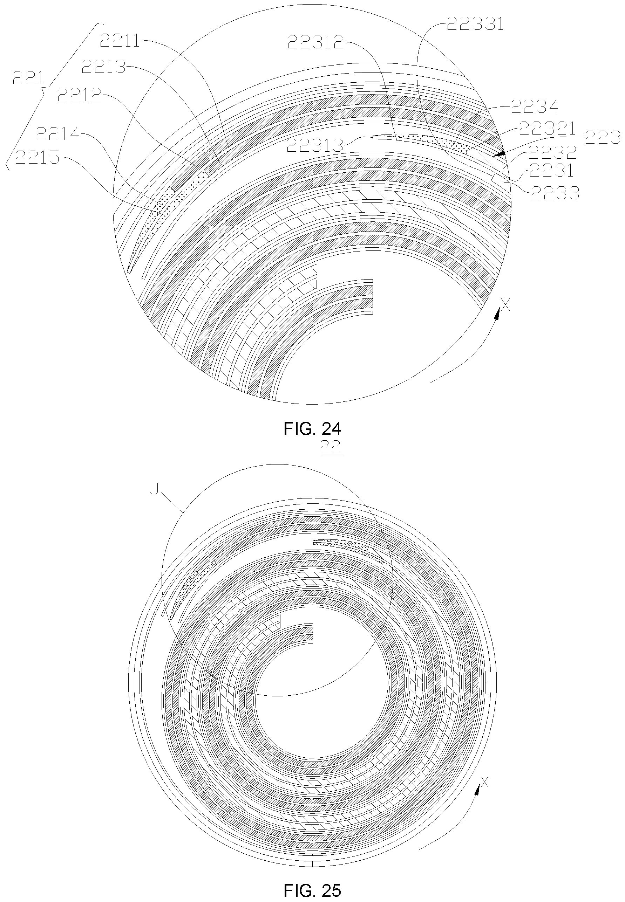

The third thinned portion 2234 may be in various forms of unequal-thickness structures. As shown in FIG. 23 and FIG. 24, in some embodiments, the thickness of the third thinned portion 2234 decreases gradually in the winding direction X.

A surface, away from the third surface 22311, of the third thinned portion 2234 tilts in the winding direction X, so that the thickness of the third thinned portion 2234 decreases gradually in the winding direction X.

The thickness of the third thinned portion 2234 decreases gradually in the winding direction X, that is, the thickness of the third thinned portion 2234 changes gradually, so that the connection positions of the third thinned portion 2234 and the third active material layer 2232 do not change suddenly in thickness, which reduces the risk of easy local strain of the adjacent electrode plates due to the connection positions of the third thinned portion 2234 and the third active material layer 2232.

A material of the third thinned portion 2234 may be the same as or different from that of the third active material layer 2232. In some embodiments, the third thinned portion 2234 is an active material layer having a same polarity as the third active material layer 2232.

Understandably, if the third active material layer 2232 is a positive electrode active material layer, the first thinned portion 2214 is also a positive electrode active material layer; or if the third active material layer 2232 is a negative electrode active material layer, the third thinned portion 2234 is also a negative electrode active material layer.

The third thinned portion 2234 is an active material layer having the same polarity as the third active material layer 2232, which is beneficial to increasing the energy densities of the battery cell 20 and the battery 100 having the electrode assembly 22.

In some embodiments, an expansion coefficient of the third thinned portion 2234 is less than that of the third active material layer 2232.

For the third thinned portion 2234 and the third active material layer 2232, the expansion coefficient is a physical quantity that represents an increase in length, area, or volume of the third thinned portion 2234 and the third active material layer 2232 in the charging and discharging process.

In a case that the third thinned portion 2234 is an active material layer having the same polarity as the third active material layer, the expansion coefficient of the third thinned portion 2234 may be less than that of the third active material layer 2232 by changing some ingredients, a proportion of ingredients, or the like of the material of the third thinned portion 2234.

In a case that the material of the third thinned portion 2234 is different from that of the third active material layer 2232, that is, the material of the third thinned portion 2234 is not an active material, the expansion coefficient of the material of the third thinned portion 2234 may be less than the expansion coefficient of the third active material layer 2232.

The expansion coefficient of the third thinned portion 2234 is less than that of the second active material layer 2213, and the third thinned portion 2234 is connected to the third tail end 22321, which can constrain expansion of the third active material layer 2232 to some extent and reduce the degree of expansion of the third active material layer 2232 in the charging and discharging process, thereby reducing the risk of easy local strain of the adjacent electrode plates due to excessive expansion of the third active material layer 2232, and alleviating the problem of cracking of the electrode plates adjacent to the third tail end 22321 and the fourth tail end 22331.

As shown in FIG. 22 and FIG. 24, in some embodiments, in the winding direction X, the third thinned portion 2234 extends from the third tail end 22321 in the winding direction X to the tail end 22313 of the second current collector.

Understandably, in the winding direction X, the tail end 22313 of the second current collector is flush with an end, away from the third tail end 22321, of the third thinned portion 2234.

The third thinned portion 2234 extends to the tail end 22313 of the second current collector, and in the winding direction X, the surface of the second current collector 2231 where the third active material layer 2232 is disposed is covered by the third active material layer 2232 and the third thinned portion 2234 jointly, to reduce the risk of a short circuit caused by puncture of the separator 222 by the burrs on the second current collector 2231.

In other embodiments, the third thinned portion 2234 may not extend from the third tail end 22321 in the winding direction X to the tail end 22313 of the second current collector, that is, the tail end 22313 of the second current collector extends beyond the end, away from the third tail end 22321, of the third thinned portion 2234 in the winding direction X.

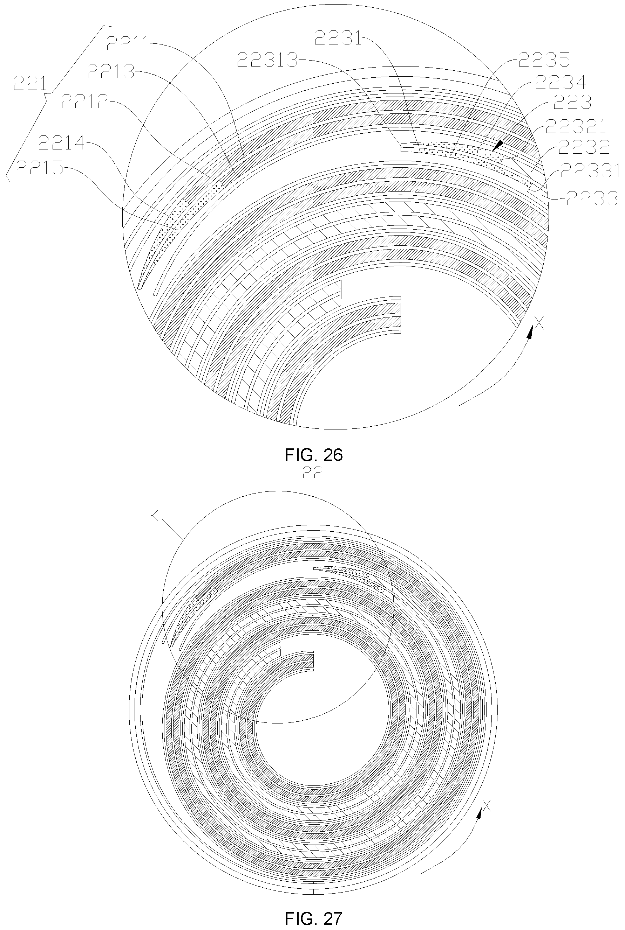

As shown in FIG. 25 and FIG. 26, in some embodiments, the second electrode plate 223 further includes a fourth thinned portion 2235, the fourth thinned portion 2235 and the fourth active material layer are disposed on a same surface of the second current collector 2231, and the fourth thinned portion 2235 extends from the fourth tail end 22331 in the winding direction X, where the thickness of the fourth thinned portion is smaller than the thickness of the fourth active material layer 2233.

The fourth thinned portion 2235 is connected to the fourth tail end 22331, and the fourth thinned portion 2235 is disposed on a portion of the fourth surface 22312 that extends beyond the second tail end 22131 in the winding direction X. Structures of the fourth thinned portion 2235 and the third thinned portion 2234 may be the same or different.

As shown in FIG. 26, the fourth thinned portion 2235 may be of an equal-thickness structure.

In other embodiments, the fourth thinned portion 2235 may alternatively be of an unequal-thickness structure. In an embodiment where the fourth thinned portion 2235 is of an unequal-thickness structure, a maximum thickness of the fourth thinned portion 2235 is less than a thickness of the fourth active material layer.

The fourth thinned portion 2235 can cover a portion of the second current collector 2231, so that the second current collector 2231 is exposed as little as possible, thereby reducing the risk of a short circuit caused by puncture of the separator 222, in contact with the second current collector 2231, of the electrode assembly 22 by burrs on the surface of the second current collector 2231, and further improving the safety performance of the battery cell 20 and the battery 100 having the electrode assembly 22.

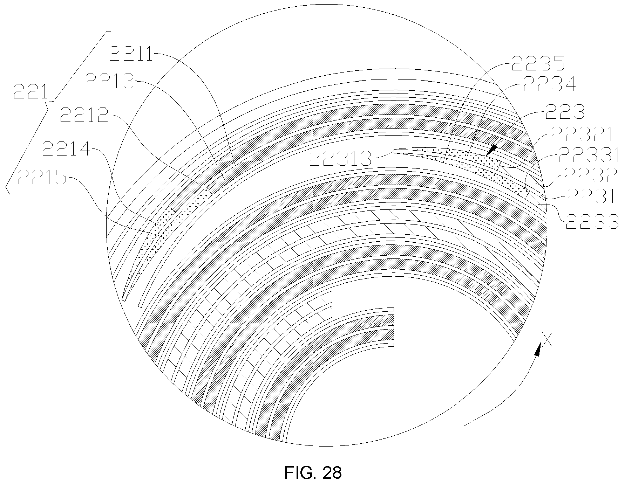

The fourth thinned portion 2235 may be in various forms of unequal-thickness structures. As shown in FIG. 27 and FIG. 28, in some embodiments, the thickness of the fourth thinned portion 2235 decreases gradually in the winding direction X.

A surface, away from the fourth surface 22312, of the fourth thinned portion 2235 tilts in the winding direction X, so that the thickness of the fourth thinned portion 2235 decreases gradually in the winding direction X.

The thickness of the fourth thinned portion 2235 decreases gradually in the winding direction X, that is, the thickness of the fourth thinned portion 2235 changes gradually, so that the connection positions of the fourth thinned portion 2235 and the fourth active material layer 2233 do not change suddenly in thickness, which reduces the risk of easy local strain of the adjacent electrode plates due to the connection positions of the fourth thinned portion 2235 and the fourth active material layer 2233.

A material of the fourth thinned portion 2235 may be the same as or different from that of the fourth active material layer 2233. In some embodiments, the fourth thinned portion 2235 is an active material layer having a same polarity as the fourth active material layer 2233.

Understandably, if the fourth active material layer 2233 is a positive electrode active material layer, the fourth thinned portion 2235 is also a positive electrode active material layer; or if the fourth active material layer 2233 is a negative electrode active material layer, the fourth thinned portion 2235 is also a negative electrode active material layer.

The fourth thinned portion 2235 is an active material layer having the same polarity as the fourth active material layer 2233, which is beneficial to increasing the energy densities of the battery cell 20 and the battery 100 having the electrode assembly 22.

In some embodiments, an expansion coefficient of the fourth thinned portion 2235 is less than that of the fourth active material layer 2233.

For the fourth thinned portion 2235 and the fourth active material layer 2233, the expansion coefficient is a physical quantity that represents an increase in length, area, or volume of the fourth thinned portion 2235 and the fourth active material layer 2233 in the charging and discharging process.

In a case where the fourth thinned portion 2235 is an active material layer having the same polarity as the fourth active material layer 2233, the expansion coefficient of the fourth thinned portion 2235 may be less than that of the fourth active material layer 2233 by changing some ingredients, a proportion of ingredients, or the like of the material of the fourth thinned portion 2235.

The expansion coefficient of the fourth thinned portion 2235 is less than that of the fourth active material layer 2233, and the fourth thinned portion 2235 is connected to the fourth tail end 22331, which can constrain expansion of the fourth active material layer 2233 to some extent and reduce the degree of expansion of the fourth active material layer 2233 in the charging and discharging process, thereby reducing the risk of easy local strain of the adjacent electrode plates due to excessive expansion of the fourth active material layer 2233, and alleviating the problem of cracking of the electrode plates adjacent to the third tail end 22321 and the fourth tail end 22331.

As shown in FIG. 26 and FIG. 28, in some embodiments, in the winding direction X, the fourth thinned portion 2235 extends from the fourth tail end 22331 in the winding direction X to the tail end 22313 of the second current collector.

Understandably, in the winding direction X, the tail end 22313 of the second current collector is flush with an end, away from the fourth tail end 22331, of the fourth thinned portion 2235.

The fourth thinned portion 2235 extends to the tail end 22313 of the second current collector, and in the winding direction X, the surface of the second current collector 2231 where the fourth active material layer 2233 is disposed is covered by the fourth active material layer 2233 and the fourth thinned portion 2235 jointly, to reduce the risk of a short circuit caused by puncture of the separator 222 by the burrs on the second current collector 2231.

In other embodiments, the fourth thinned portion 2235 may not extend from the fourth tail end 22331 in the winding direction X to the tail end 22313 of the second current collector, that is, the tail end 22313 of the second current collector extends beyond the end, away from the fourth tail end 22331, of the fourth thinned portion 2235 in the winding direction X.

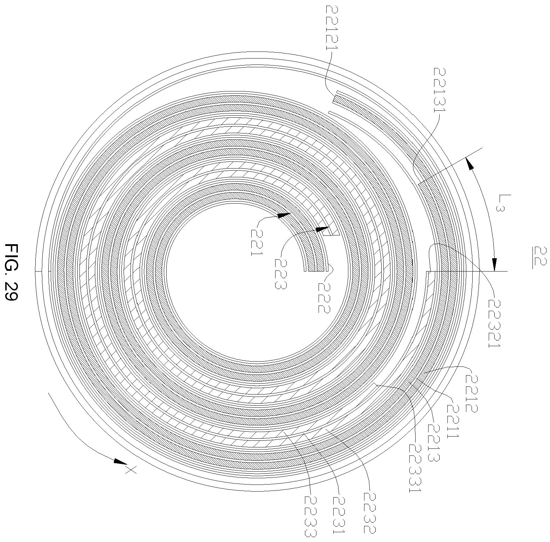

As shown in FIG. 29, in some embodiments, the first electrode plate 221 is a negative electrode plate, the second electrode plate 223 is a positive electrode plate, the first tail end 22121 is located on the outer side of the first current collector 2211 and extends beyond the second tail end 22131 in the winding direction X, and the third tail end 22321 is located on the outer side of the second current collector 2231 and extends beyond the fourth tail end 22331 in the winding direction X; and the second tail end 22131 extends beyond the third tail end 22321 in the winding direction X.

The outer side and the inner side are relative to the winding center of the electrode assembly 22 in a direction perpendicular to the winding center of the electrode assembly 22, the outer side refers to a side further away from the electrode assembly 22 in the direction perpendicular to the winding center of the electrode assembly 22, and the inner side refers to a side closer to the electrode assembly 22 in the direction perpendicular to the winding center of the electrode assembly 22.

The expression "the outer side of the first current collector 2211" refers to a side, further away from the winding center of the electrode assembly 22, of the first current collector 2211 in its thickness direction. In this embodiment, the first surface 22111 of the first current collector 2211 is further away from the winding center of the electrode assembly 22 than the second surface 22112, the side where the first surface 22111 is located is the outer side of the first current collector 2211, and the side where the second surface 22112 is located is the inner side of the first current collector 2211.

The expression "the outer side of the second current collector 2231" refers to a side, further away from the winding center of the electrode assembly 22, of the second current collector 2231 in its thickness direction. In this embodiment, the third surface 22311 of the second current collector 2231 is further away from the winding center of the electrode assembly 22 than the fourth surface 22312, the side where the third surface 22311 is located is the outer side of the second current collector 2231, and the side where the fourth surface 22312 is located is the inner side of the second current collector 2231.

In this embodiment, both the first tail end 22121 and the second tail end 22131 are located on the outer side of the third tail end 22321.

The second tail end 22131 extends beyond the third tail end 22321 in the winding direction X, so that the second active material layer 2213 fully covers the third active material layer 2232, which can reduce the risk of lithium precipitation, thereby improving the safety performance of the battery cell 20 and the battery 100 having the electrode assembly 22; and fracture of the adjacent electrode plates under severe local force due to the formation of a new large-sized step by the alignment of the second tail end 22131 and the second tail end 22131 can also be avoided.

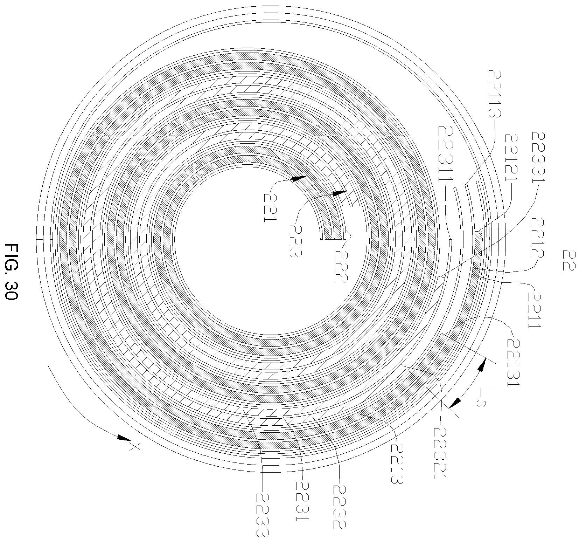

As shown in FIG. 30, in other embodiments, the first electrode plate 221 is a negative electrode plate, the second electrode plate 223 is a positive electrode plate, the first tail end 22121 is located on the outer side of the first current collector 2211 and extends beyond the second tail end 22131 in the winding direction X, and the fourth tail end 22331 is located on the inner side of the second current collector 2231 and extends beyond the third tail end 22321 in the winding direction X; and the second tail end 22131 extends beyond the third tail end 22321 in the winding direction X.

In this embodiment, both the first tail end 22121 and the second tail end 22131 are located on the outer side of the third tail end 22321.

The second tail end 22131 extends beyond the third tail end 22321 in the winding direction X, which can avoid fracture of the adjacent electrode plates under severe local force due to the formation of a new large-sized step by the alignment of the second tail end 22131 and the second tail end 22131, and enables the second active material layer 2213 to fully cover the third active material layer 2232, thereby reducing the risk of lithium precipitation in the battery cell 20 and the battery 100 having the electrode assembly 22 and further improving the safety performance of the battery cell 20 and the battery 100.

With continued reference to FIG. 29 and FIG. 30, in the winding direction X, a distance between the second tail end 22131 and the third tail end 22321 is L₃, satisfying L₃ ≥ 10 mm.

L₃ may be 11 mm, 13 mm, 15 mm, 17 mm, 19 mm, 21 mm, 23 mm, or the like.

The distance L₃ between the second tail end 22131 and the third tail end 22321 satisfies L₃ ≥ 10 mm, which can avoid fracture of the adjacent electrode plates under severe local force due to the formation of a new large-sized step by the alignment of the second tail end 22131 and the second tail end 22131.

An embodiment of the present application further provides a battery cell 20. The battery cell 20 includes the electrode assembly 22 provided by any of the foregoing embodiments.

The electrode plates of the electrode assembly 22 provided by any of the foregoing embodiments are less prone to cracking due to local strain on the electrode plates. The battery cell 20, including the electrode assembly 22, has a lower risk of a short circuit due to the puncture of the separator 222 by the cracking of the electrode plates. Therefore, the battery cell 20 has good safety.

An embodiment of the present application further provides a battery 100. The battery 100 includes a box 10 and at least one battery cell 20 provided by the foregoing embodiments, where the at least one battery cell 20 is accommodated in the box 10.

The battery cell 20 in the foregoing embodiment has a lower risk of a short circuit due to the puncture of the separator 222 by the cracking of the electrode plates, and the battery cell 20 has good safety, so the battery 100 with the battery cell 20, provided by the embodiment of the second aspect, also has good safety.

An embodiment of the present application further provides an electrical device, which includes at least one battery 100 provided by the foregoing embodiment.

The battery 100 provides electrical energy for the electrical device. The battery 100 in the foregoing embodiment has good safety, so the electrical device, supplied with power by the battery 100 provided by the embodiment of the third aspect, can improve electrical safety.

An embodiment of the present application provides a cylindrical electrode assembly 22. The electrode assembly 22 includes a first electrode plate 221, a separator 222, and a second electrode plate 223. The first electrode plate 221 is a negative electrode plate, and the second electrode plate 223 is a positive electrode plate. The separator 222 insulates and separates the first electrode plate 221 and the second electrode plate 223. The first electrode plate 221, the separator 222, and the second electrode plate 223 are laminated and wound to form a cylindrical wound electrode assembly 22.

The first electrode plate 221 includes a first current collector 2211, a first active material layer 2212, and a second active material layer 2213. The first active material layer 2212 is disposed on a first surface 22111 of the first current collector 2211, and the second active material layer 2213 is disposed on a second surface 22112 of the first current collector 2211. A first tail end 22121 of the first active material layer 2212 and a second tail end 22131 of the second active material layer 2213 are misaligned in a winding direction X. In the winding direction X, a distance between the first tail end 22121 and the second tail end 22131 is L₁, satisfying L₁ ≥ 10 mm. The first tail end 22121 is located on an outer side of the first current collector 2211, and the second tail end 22131 is located on an inner side of the first current collector 2211.

The second electrode plate 223 includes a second current collector 2231, a third active material layer 2232, and a fourth active material layer 2233. The third active material layer 2232 is disposed on a third surface 22311 of the second current collector 2231, and the fourth active material layer 2233 is disposed on a fourth surface 22312 of the second current collector 2231. A third tail end 22321 of the third active material layer 2232 and a fourth tail end 22331 of the fourth active material layer 2233 are misaligned in the winding direction X. In the winding direction X, a distance between the third tail end 22321 and the fourth tail end 22331 is L₂, satisfying L₂ ≥ 10 mm.

The third tail end 22321 is located on an outer side of the second current collector 2231, and the fourth tail end 22331 is located on an inner side of the second current collector 2231. Both the first tail end 22121 and the second tail end 22131 are located on an outer side of the third tail end 22321. In the winding direction X, the second tail end 22131 extends beyond the third tail end 22321, and a distance between the second tail end 22131 and the third tail end 22321 is L₃, satisfying L₃ ≥ 10 mm.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. An electrode assembly, the electrode assembly being of a wound structure and comprising a first electrode plate, the first electrode plate comprising a first current collector, a first active material layer, and a second active material layer, and the first active material layer and the second active material layer being disposed on two opposite surfaces of the first current collector respectively, wherein the first active material layer has a first tail end, the second active material layer has a second tail end, and the first tail end and the second tail end are misaligned in a winding direction of the electrode assembly.

2. The electrode assembly according to claim 1, wherein in the winding direction, a distance between the first tail end and the second tail end is L₁, satisfying L₁ ≥ 10 mm.

3. The electrode assembly according to claim 1 or 2, wherein the first electrode plate further comprises a first thinned portion, the first thinned portion and the first active material layer are disposed on a same surface of the first current collector, and the first thinned portion extends from the first tail end in the winding direction,
wherein a thickness of the first thinned portion is smaller than a thickness of the first active material layer.

4. The electrode assembly according to claim 3, wherein the thickness of the first thinned portion decreases gradually in the winding direction.

5. The electrode assembly according to claim 3 or 4, wherein the first thinned portion is an active material layer having a same polarity as the first active material layer.

6. The electrode assembly according to any one of claims 3-5, wherein an expansion coefficient of the first thinned portion is less than an expansion coefficient of the first active material layer.

7. The electrode assembly according to any one of claims 3-6, wherein the first thinned portion extends from the first tail end in the winding direction to a tail end of the first current collector.

8. The electrode assembly according to any one of claims 3-7, wherein the first electrode plate further comprises a second thinned portion, the second thinned portion and the second active material layer are disposed on a same surface of the first current collector, and the second thinned portion extends from the second tail end in the winding direction,
wherein a thickness of the second thinned portion is smaller than a thickness of the second active material layer.

9. The electrode assembly according to claim 8, wherein the thickness of the second thinned portion decreases gradually in the winding direction.

10. The electrode assembly according to claim 8 or 9, wherein the second thinned portion is an active material layer having a same polarity as the second active material layer.

11. The electrode assembly according to any one of claims 8-10, wherein an expansion coefficient of the second thinned portion is less than an expansion coefficient of the second active material layer.

12. The electrode assembly according to any one of claims 8-11, wherein in the winding direction, the second thinned portion extends from the second tail end in the winding direction to the tail end of a first current collector.

13. The electrode assembly according to any one of claims 1-12, wherein the electrode assembly further comprises a separator and a second electrode plate laminated and wound with the first electrode plate, the second electrode plate has a polarity opposite to a polarity of the first electrode plate, and the separator is sandwiched between the first electrode plate and the second electrode plate; and the second electrode plate comprises a second current collector, a third active material layer, and a fourth active material layer; and the third active material layer and the fourth active material layer are disposed on two opposite surfaces of the second current collector respectively,
wherein the third active material layer has a third tail end, the fourth active material layer has a fourth tail end, and the first tail end and the second tail end are misaligned in the winding direction.

14. The electrode assembly according to claim 13, wherein in the winding direction, a distance between the third tail end and the fourth tail end is L₂, satisfying L₂ ≥ 10 mm.

15. The electrode assembly according to claim 13 or 14, wherein the second electrode plate further comprises a third thinned portion, the third thinned portion and the third active material layer are disposed on a same surface of the second current collector, and the third thinned portion extends from the third tail end in the winding direction,
wherein a thickness of the third thinned portion is smaller than a thickness of the third active material layer.

16. The electrode assembly according to claim 15, wherein the thickness of the third thinned portion decreases gradually in the winding direction.

17. The electrode assembly according to claim 15 or 16, wherein the third thinned portion is an active material layer having a same polarity as the third active material layer.

18. The electrode assembly according to any one of claims 15-17, wherein an expansion coefficient of the third thinned portion is less than an expansion coefficient of the third active material layer.

19. The electrode assembly according to any one of claims 15-18, wherein in the winding direction, the third thinned portion extends from the third tail end in the winding direction to a tail end of the second current collector.

20. The electrode assembly according to any one of claims 15-19, wherein the second electrode plate further comprises a fourth thinned portion, the fourth thinned portion and the fourth active material layer are disposed on a same surface of the second current collector, and the fourth thinned portion extends from the fourth tail end in the winding direction,
wherein a thickness of the fourth thinned portion is smaller than a thickness of the fourth active material layer.

21. The electrode assembly according to claim 20, wherein the thickness of the fourth thinned portion decreases gradually in the winding direction.

22. The electrode assembly according to claim 20 or 21, wherein the fourth thinned portion is an active material layer having a same polarity as the fourth active material layer.

23. The electrode assembly according to any one of claims 20-22, wherein an expansion coefficient of the fourth thinned portion is less than an expansion coefficient of the fourth active material layer.

24. The electrode assembly according to any one of claims 20-23, wherein in the winding direction, the fourth thinned portion extends from the fourth tail end in the winding direction to a tail end of the second current collector.

25. The electrode assembly according to any one of claims 13-24, wherein the first electrode plate is a negative electrode plate, the second electrode plate is a positive electrode plate, the first tail end is located on an outer side of the first current collector and extends beyond the second tail end in the winding direction, and the third tail end is located on an outer side of the second current collector and extends beyond the fourth tail end in the winding direction; and
the second tail end extends beyond the third tail end in the winding direction.

26. The electrode assembly according to any one of claims 13-24, wherein the first electrode plate is a negative electrode plate, the second electrode plate is a positive electrode plate, the first tail end is located on the outer side of the first current collector and extends beyond the second tail end in the winding direction, and the fourth tail end is located on an inner side of the second current collector and extends beyond the third tail end in the winding direction; and
the second tail end extends beyond the third tail end in the winding direction.

27. The electrode assembly according to claim 25 or 26, wherein in the winding direction, a distance between the second tail end and the third tail end is L₃, satisfying L₃ ≥ 10 mm.

28. A battery cell, comprising the electrode assembly according to any one of claims 1-27.

29. A battery, comprising:
a box; and
at least one battery cell each according to claim 28, wherein the at least one battery cell is
accommodated in the box.

30. An electrical device, comprising at least one battery each according to claim 29.
